# EUROPEAN PATENT APPLICATION

(11) **EP 0 807 889 A2**
(43) Date of publication of application: **19.11.1997**
(21) Application number: 97107808.4
(22) Date of filing: 13.05.1997
(51) Int. Cl.: G06F 17/22, G06F 17/30

(54) **Structured document processor, method of processing a structured document, and database system**

(30) Priority: 14.05.1996 JP 119057/96
(71) Applicant: FUJI XEROX CO., LTD., Minato-ku, Tokyo (JP)
(72) Inventor: Hazama, Tan, c/o Fuji Xerox Co., Ltd., Ashigarakami-gun, Kanagawa 259-01 (JP); Hayashi, Koichi, c/o Fuji Xerox Co., Ltd., Ashigarakami-gun, Kanagawa 259-01 (JP)
(74) Representative: Grünecker, Kinkeldey, Stockmair & Schwanhäusser Anwaltssozietät

(57) **Abstract**

A structure document processor for managing or processing a document is disclosed which has document constituent elements, which are constituted by including document contents, and a hierarchical structure for relating the document constituent elements, the structure document processor comprising:
node-group managing means for setting as a node group nodes located at a same hierarchical level of the hierarchical structure among nodes constituting the hierarchical structure, and for storing the order, in the hierarchical structure, of the nodes included in that node group; and
logical-style managing means for storing a hierarchical relationship, in the hierarchical structure, of node groups.

## Description

### BACKGROUND OF THE INVENTION

The present invention relates to a structured document processor and a database system for managing and processing a structured document which has a logical structure and is prepared and edited by a computer, as well as a method of processing a structured document for processing such a structured document.

Hitherto, various document processing systems have been developed to prepare and edit documents by a computer. A structured document processing system, among others, permits editing in which the structure of a document is set as a unit, by providing the document with logical structures such as chapters and sections, and by, for example, lowering the level of Chapter 2 into one section in Chapter 1, and permits layout processing in units of chapters and sections by, for example, allocating new pages for the respective chapters.

When a document is prepared, there are cases where a plurality of documents which share the contents to be prepared are present. For example, it is not uncommon that, in a development process of a certain product, a technical report and a functional specification, through different in terms of objects and styles, share some portions. In addition, in a case where a long document, such as a technical report, a thesis, or the like, is prepared, even if a finally completed form is only singular, in the process of its preparation there is a process of gradually approaching the completed form on a trial-and-error basis by combining a plurality of parts after preparing them separately, replacing portions of the separately prepared parts, or altering the structure of chapters. It can be considered that, in the respective phases of that process, the process is similar to the case where, as it were, a plurality of documents which share parts of the contents are being prepared.

As a structured-document processing system having a function for assisting such a processing of preparing a plurality of documents sharing parts, for example, a document processor described in the Unexamined Japanese Patent Application Publication No. Hei 5-225185 is known. In this apparatus, an attempt is made to share the contents of the documents by providing separate logical structures for the different documents in the system, and by allowing content portions to be shared.

With this system, however, since the logical structures of the plurality of documents are formed as respectively independent tree structures, the alteration of a logical structure in a document cannot affect another document. For example, in a case where both a document A and a document B have chapters "Input Means" which include sections "Personal Computer Version" and "Workstation Version," if a section "Mainframe Version" is added to the document A in the logical structure, it is desirable that the section "Mainframe Version" be present in the chapter "Input Means" in the document B as well. When such a correction is made, it is necessary for a user himself or herself to insert the section "Mainframe Version" by performing utterly the same operation for the document B as the one which was performed for the document A. Such a redundant operation is liable to produce an error, is troublesome, and imposes a large burden on the user. Namely, this system realizes only the sharing of the contents, and is unable to share the logical structure.

As another system, a system described in the Unexamined Japanese Patent Application Publication No. Hei 7-44563 is known. In this system, by multiplexing nodes whose contents in the logical structure are different, the editing of a plurality of documents in which portions of the same contents are shared is realized. According to this system, it is possible to eliminate the redundant operation in the shared portions, thereby making it possible to avoid the aforementioned troublesomeness.

However, the cases where sharing is possible in this system are confined to cases where logical structures in their upper positions also conform to each other. For example, in the case of a document having the section "Personal Computer Version" in the chapter "Input Means" and a document having the section "Input Means" in the chapter "Personal Computer Version," sharing is impossible although the contents included in the respective sections are the same. The reason is that since the chapter levels are different, it is necessary to provide multiplexing, and since the nodes at the chapter level are multiplexed, sharing at lower levels becomes impossible. In other words, this system permits sharing only with respect to subtrees of the logical structure including the content portions, and does not permit the sharing of contents in cases where higher-level structures do not conform. Such a problem does not occur in the system described in the Unexamined Japanese Patent Application Publication No. Hei 5-225185 mentioned above. This is because the sharing of arbitrary contents is possible irrespective of higher-level structures.

As described above, in the conventional techniques, since the mechanism of sharing a logical structure and the mechanism of sharing the contents are not made independent, it is impossible to realize the sharing of the logical structure and the sharing of the contents at the same time.

### SUMMARY OF THE INVENTION

The present invention has been devised in view of the above-described circumstances, and its object is to provide a structure-document processor, a method of processing a structured document, and a database system which make it possible to share both a logical structure and content portions among a plurality of documents, and make it possible to effectively and efficiently effect the preparation and editing of a plurality of related documents.

In accordance with the invention according to claim 1, there is provided a structure document processor for managing or processing a document which has document constituent elements, which are constituted by including document contents, and a hierarchical structure for relating the document constituent elements, the structure document processor comprising: node-group managing means for setting as a node group nodes located at a same hierarchical level of the hierarchical structure among nodes constituting the hierarchical structure, and for storing the order, in the hierarchical structure, of the nodes included in that node group; and logical-style managing means for storing a hierarchical relationship, in the hierarchical structure, of node groups.

In accordance with the invention according to claim 2, in the structure document processor according to claim 1, the node-group managing means stores at least identifiers of the node groups including the nodes and the order, in the hierarchical structure, of the nodes, in correspondence with identifiers of the respective nodes.

In accordance with the invention according to claim 3, the structure document processor according to claim 1 or 2 further comprises: content managing means for storing the document constituent elements, the nodes to which the document constituent elements respectively belong, and the order of the document constituent elements in the nodes.

In accordance with the invention according to claim 4, in the structure document processor according to claim 3, the content managing means stores at least an identifier of the node including the document constituent element and the order, in a logical hierarchical structure, of the document constituent element, in correspondence with each of the document constituent elements.

In accordance with the invention according to claim 5, in the structure document processor according to claim 3 or 4 further comprises: logical-structure generating unit for preparing the hierarchical structure on the basis of the hierarchical relationship, in the hierarchical structure, of the node groups stored in the logical-style managing means, the order, in the hierarchical structure, of the nodes in each of the node groups stored in the node-group managing means, the document constituent elements stored in the content managing means, the nodes to which the document constituent elements respectively belong, and the order of the document constituent elements in each of the nodes.

In accordance with the invention according to claim 6, in the structure document processor according to claim 5 further comprises: changing means for changing the hierarchical relationship of the node groups stored in the logical-style managing means, wherein the logical-structure generating unit changes the hierarchical structure in accordance with the change of the hierarchical relationship of the node groups.

In accordance with the invention according to claim 7, there is provided a method of processing a structured document for processing a document which has document constituent elements, which are constituted by including document contents, and a hierarchical structure for relating the document constituent elements, comprising the steps of: recursively executing a step of setting as a node group nodes located at a same hierarchical level of the hierarchical structure among nodes constituting the hierarchical structure, and storing the order, in the hierarchical structure, of the nodes included in that node group, as well as storing a hierarchical relationship, in the hierarchical structure, of node groups, and determining the hierarchical relationship of the node groups in the hierarchical structure from the stored hierarchical relationship of the node groups, and a step of determining the order of arrangement, in the hierarchical structure, of the node groups included in a same layer from the stored hierarchical relationship of the node groups; and preparing the hierarchical structure of the structured document on the basis of the order of arrangement of the node groups and the order of the nodes included in the respective node groups.

In accordance with the invention according to claim 8, in the method of processing a structured document according to claim 7, the node to which the document constituent element belongs and the order of the document constituent element in the node are further stored, a position at which the document constituent element is arranged in the hierarchical structure is determined on the basis of the same, and the document constituent element is arranged in the prepared hierarchical structure.

In accordance with the invention according to claim 9, there is provided a database system for storing documents each of which has document constituent elements, which are constituted by including document contents, and a hierarchical structure for relating the document constituent elements, the database system comprising: node-group managing means for setting as a node group nodes located at a same hierarchical level of the hierarchical structure among nodes constituting the hierarchical structure, and for storing the order, in the hierarchical structure, of the nodes included in that node group; logical-style managing means for storing a hierarchical relationship, in the hierarchical structure, of node groups; and content managing means for storing the document constituent elements, the nodes to which the document constituent elements respectively belong, and the order, in the hierarchical structure, of the nodes.

### BRIEF DESCRIPTION OF THE DRAWINGS

Fig. 1 is a block diagram illustrating an embodiment of a structured document processor in accordance with the present invention;
Figs. 2A and 2B are explanatory diagrams of an example of the text of a document to be prepared and its document structure;
Fig. 3 is an explanatory diagram of a specific example of the input of nodes and node groups in accordance with the embodiment of the present invention;
Fig. 4 is an explanatory diagram of a specific example of the input of a logical style in accordance with the embodiment of the present invention;
Fig. 5 is an explanatory diagram of a specific example of the input of contents in accordance with the embodiment of the present invention;
Figs. 6A to 6D are explanatory diagrams of an example of the logical structure of the document prepared in the specific example of processing in accordance with the embodiment of the present invention;
Fig. 7 is a flowchart illustrating an example of the processing of preparation and editing of the contents by a content editing unit;
Fig. 8 is a flowchart illustrating an example of the processing of generating a logical structure of a document by a logical-structure generating unit;
Fig. 9 is a flowchart illustrating an example of processing of the arrangement of the contents by a document-allocation display unit;
Figs. 10A and 10B are explanatory diagrams of another example of a document which is prepared in a specific example of processing in accordance with the embodiment of the present invention; and
Fig. 11 is an explanatory diagram of another specific example of the input of a logical style in accordance with the embodiment of the present invention.

### DETAILED DESCRIPTION OF THE PREFERRED EMBODIMENTS

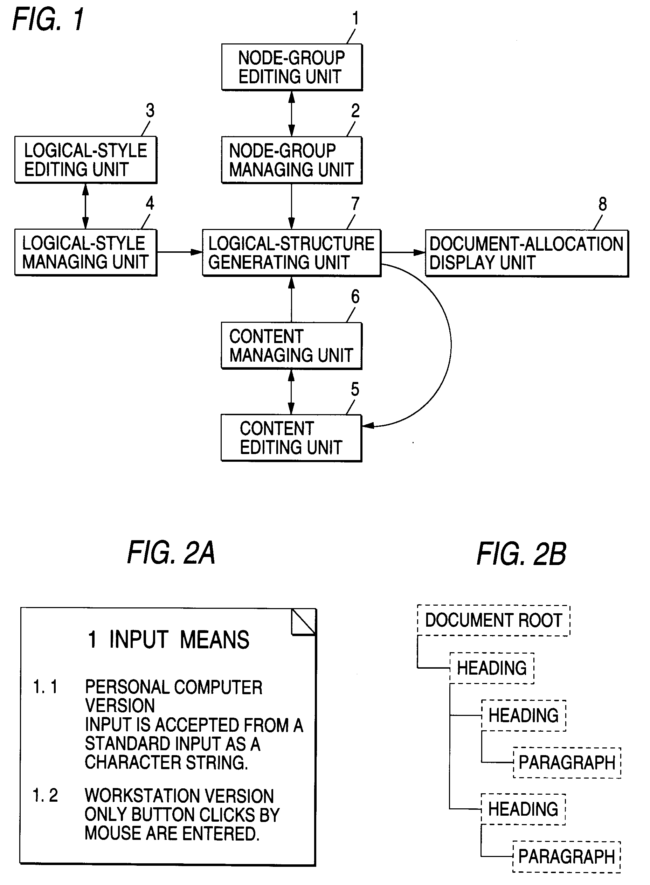

Fig. 1 is a block diagram illustrating an embodiment of a structured document processor in accordance with the present invention. In the drawing, reference numeral 1 denotes a node-group editing unit; 2, a node-group managing unit; 3, a logical-style editing unit; 4, a logical-style managing unit; 5, a content editing unit; 6, a content managing unit; 7, a logical-structure generating unit; and 8, a document-allocation display unit. The node-group editing unit 1 prepares and edits node groups and nodes. In addition, the node-group managing unit 2 manages the nodes and node groups prepared by the node-group editing unit 1. Here, the node group refers to a group of nodes which are included in the same layer in the logical structure. As for the nodes which belong to a certain node group, their respective order numbers are stored and managed.

The logical-style editing unit 3 prepares and edits logical styles. In addition, the logical-style managing unit 4 manages the logical styles. The logical style shows a logical structure of a document, and is managed by the hierarchical relation of the node groups.

The content editing unit 5 prepares and edits the contents. In addition, the content managing unit 6 manages the contents. The contents can be related to a plurality of nodes, and are ordered according to the nodes in which the contents are contained.

The logical-structure generating unit 7 generates a logical structure of a document on the basis of the node groups and nodes which are managed by the node-group managing unit 2, the logical style which is managed by the logical-style managing unit 4, and the contents which are managed by the content managing unit 6. The document-allocation display unit 8 displays the document on the basis of the document structure generated by the logical-structure generating unit 7.

A description will be given of the outline of an example of the operation in accordance with an embodiment of the structured document processor and the method of processing a structured document in accordance with the present invention. A user prepares and edits a data structure which is managed by the node-group managing unit 2, the logical-style managing unit 4, and the content managing unit 6, respectively, through the following three operations:
(1) the preparation and editing of node groups and nodes by the node-group editing unit 1;
(2) the preparation and editing of a logical style by the logical-style editing unit 3; and
(3) the preparation and editing of the contents by the content editing unit 5.
The results of preparation and editing are stored in and managed by the node-group managing unit 2, the logical-style managing unit 4, and the content managing unit 6, respectively.

In the preparation of the logical structure of a document, the user designates a logical style to the logical-structure generating unit 7. The logical-structure generating unit 7 generates a logical structure on the basis of various data, including the designated logical style among the logical styles being managed by the logical-style managing unit 4, the nodes and node groups being managed by the node-group managing unit 2, and the contents being managed by the content managing unit 6. The content editing unit 5 displays the logical structure of the document generated by the logical-structure generating unit 7, and the user effects the preparation and editing, such as deletion, movement, and copying, of the contents of the document in the displayed logical structure. The contents of the document which have been prepared and edited are stored in and managed by the content managing unit 6. In addition, the user is able to obtain a desired document by allocating and displaying in the document-allocation display unit 8 the document which conforms to the logical structure generated by the logical-structure generating unit 7.

Hereafter, a detailed description will be given of the example of the operation in accordance with the embodiment of the structured document processor and the method of processing a structured document in accordance with the present invention by citing a specific example. Fig. 2 is an explanatory diagram of an example of the text of a document to be prepared and its document structure. In the explanation that follows, it is assumed that the user prepares a document A of the text such as the one shown in Fig. 2A. In this document A, two sections "1.1 Personal Computer Version" and "1.2 Workstation Version" are provided below a chapter "1 Input Means," and a sentence with contents is written in each section. Such a structure is shown in Fig. 2B as a tree structure. Presumably, as the structure of the document A, the user conceives a document structure such as the one shown in Fig. 2B. In the preparation of the document A, the document structure such as the one shown in Fig. 2B is prepared, and the contents are entered.

First, a description will be given of an example of the operation of preparing and editing node groups and nodes by the node-group editing unit 1. The node-group editing unit 1 generates data on the node groups and nodes by the designation by the user or automatic generation by the system. The generated node groups and nodes are stored in and managed by the node-group managing unit 2. In addition, the data on the node groups and nodes stored in and managed by the node-group managing unit 2 is presented to the user by the node-group editing unit 1, allowing editing to be effected by the user.

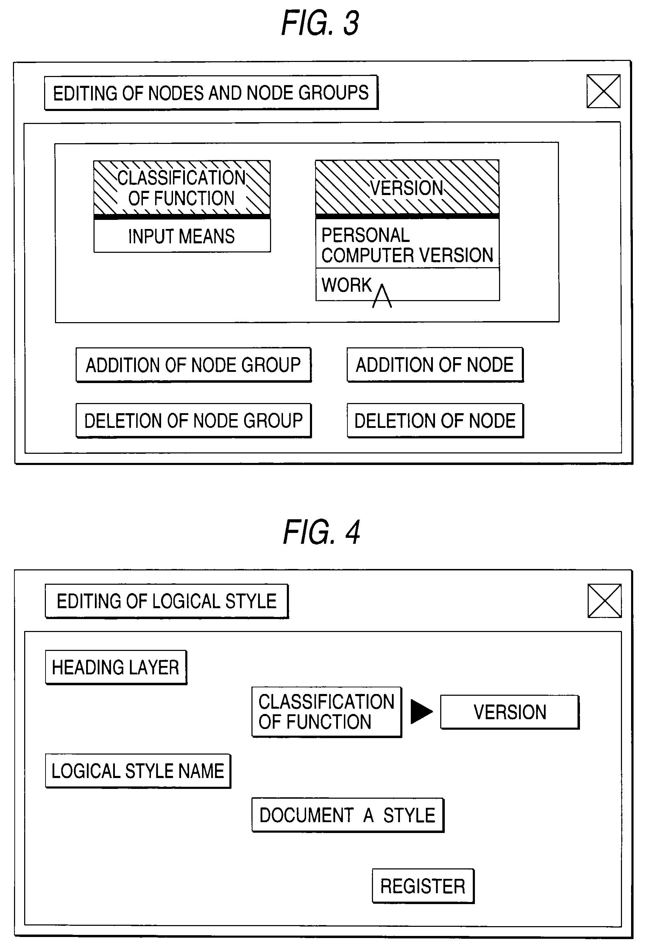

Fig. 3 is an explanatory diagram of a specific example of the input of nodes and node groups in accordance with the embodiment of the present invention. The user inputs nodes and node groups by using a node and node-group edit window shown in Fig. 3. The node and node-group edit window belongs to the node-group editing unit 1. The node constitutes a unit of a chapter or a section of a document as a logical object of the document which is generated by the logical-structure generating unit 7. The node group is an ordered group of nodes.

In Fig. 3, hatched columns are regions where node group names are respectively entered, and columns continuing therebelow are regions where node names are respectively entered. In Fig. 3, a node group "Classification of Function" has been prepared by the user, and "Input Means" has been entered as a node which belongs to it. Further, a node group "Version" has been prepared, and two items have been entered as nodes which belong to it. Namely, "Personal Computer Version" and "Workstation Version" have been entered as the nodes. The mark "∧" indicates a cursor, and shows that, at this point of time, entry has been made up to "Work" as the node name. In the drawing, a number of buttons are displayed in a lower portion of the window, so as to permit addition and deletion of node groups and addition and deletion of nodes. In Fig. 3, since the node name is being entered, the state is one in which the addition of a node has been selected.

Fig. 4 is an explanatory diagram of a specific example of the input of a logical style in accordance with the embodiment of the present invention. The data on the logical style is generated by the logical-style editing unit 3 according to an instruction by the user, and is stored in and managed by the logical-style managing unit 4. The display of such an instruction by the user and the data on the logical style which is stored and managed can be effected by using a logical style edit window such as the one shown in Fig. 4.

When the logical style of a document is prepared, a heading stage is first designated. Node groups necessary for the preparation of the document A are selected from the node groups, and are designated consecutively starting from a node group which includes a node located in a higher position in the logical structure, thus preparing a string of node groups and setting the same as the heading stage. The heading layer constitutes a layered relationship of the logical structure of the document when the logical structure is prepared by the logical-structure generating unit 7. In Fig. 4, the two node groups "Classification of Function" and "Version" are designated as a string in which "Classification of Function" is set at a beginning. A name can be imparted to such a string of node groups. In Fig. 4, the name is designated in the region of a logical style name. Here, the name is registered as "Document A Style" with respect to the string of the two node groups "Classification of Function" and "Version."

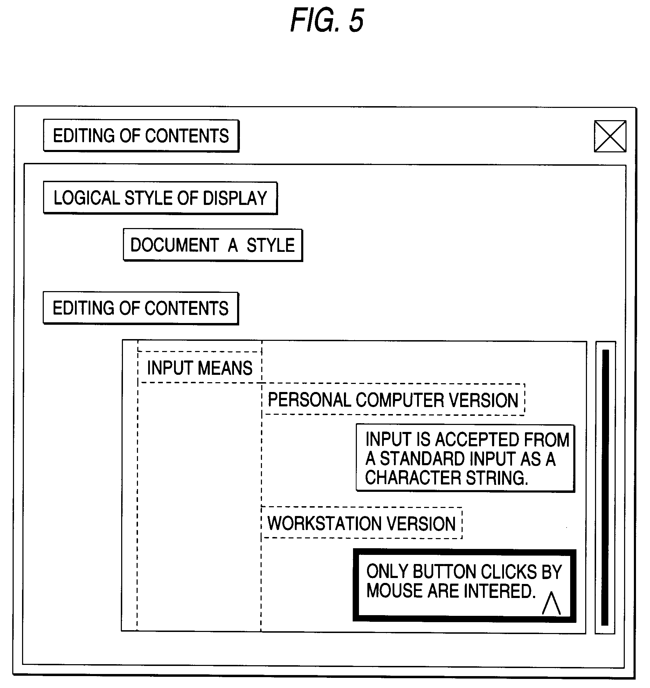

Fig. 5 is an explanatory diagram of a specific example of the input of contents in accordance with the embodiment of the present invention. The content editing unit 5 generates and edits data on the contents in accordance with the user's instruction, and the content managing unit 6 stores and manages the same. In the preparation and editing of the data on the contents, it is possible to use a contents edit window such as the one shown in Fig. 5.

In the contents edit window, the user selects a logical style among the registered logical styles. In Fig. 5, the "Document A Style" has been selected. If the logical style is selected, the name of the selected logical style is sent to the logical-structure generating unit 7. The logical-structure generating unit 7 generates in a node-group unit the logical structure of the document where the respective nodes are located in accordance with the designated logical style. The generated logical structure of the document is displayed in a lower portion of the window. The user is able to prepare the contents in accordance with the generated logical structure. In Fig. 5, the logical object surrounded by the dotted lines of the contents edit window, while each paragraph surrounded by the solid lines is the prepared contents. There is no problem even if the contents are graphics or tables.

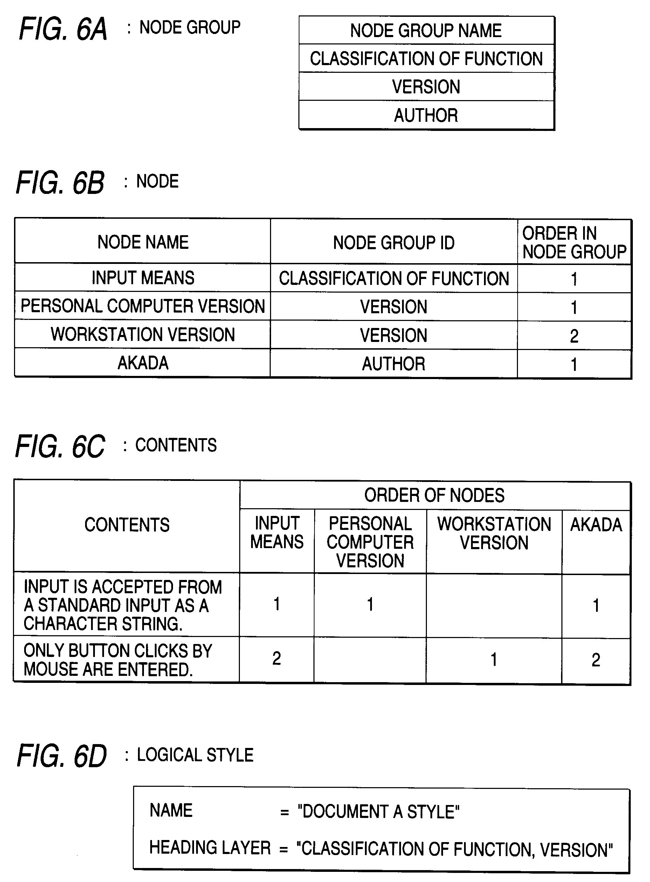

In this way, the respective data on the node groups, the nodes, and the contents are generated by the node-group editing unit 1, the logical-style editing unit 3, and the content editing unit 5. Fig. 6 is an explanatory diagram of an example of the logical structure of the document prepared in the specific example of processing in accordance with the embodiment of the present invention. As the node groups, "Classification of Function" and "Version," which are inputted in the node and node-group edit window shown in Fig. 3, are registered, as shown in Fig. 6A. In addition, as the nodes, "Input Means," "Personal Computer Version," and "Workstation Version" are registered together with IDs of the node groups to which they respectively belong as well as their order in the node group, as shown in Fig. 6B. The node "Input Means" belongs to the node group "Classification of Function," and its order in the node group "Classification of Function" is first. Both the nodes "Personal Computer Version" and "Workstation Version" belong to the node group "Version," their respective orders being first and second. The tables shown in Figs. 6A and 6B are managed by the node-group managing unit 2.

The content managing unit 6 manages a table such as the one shown in Fig. 6C. The contents generated and edited by the content editing unit 5 are stored in such a manner that the nodes to which the contents belong and the relationship of order between the contents included in the nodes can be ascertained. In Fig. 6C, if the contents are included in the respective nodes, order numbers of the contents are stored. For example, the contents "Input is accepted from a standard input as a character string" are included in the nodes "Input Means," "Personal Computer Version," and "AKADA," and order numbers of the respective nodes are 1, 1, and 1.

As shown in Fig. 6D, the logical-style managing unit 4 manages the logical style name and the heading layer in a pair. Fig. 6D shows that, in the case of the logical style name "Document A Style," the node group "Version" is developed at a position below the node group "Classification Of Function."

The nodes and node groups can be automatically generated by the system without being directly designated by the user, and default data can be prepared in advance, so that the nodes, node groups, and logical styles can be generated without being directly designated by the user. In Fig. 6, an node group "Author" is an example of a node group which has been prepared in advance by the system. In addition, a node "AKADA" is an example which is automatically generated by the system from the user ID of the author of the document A.

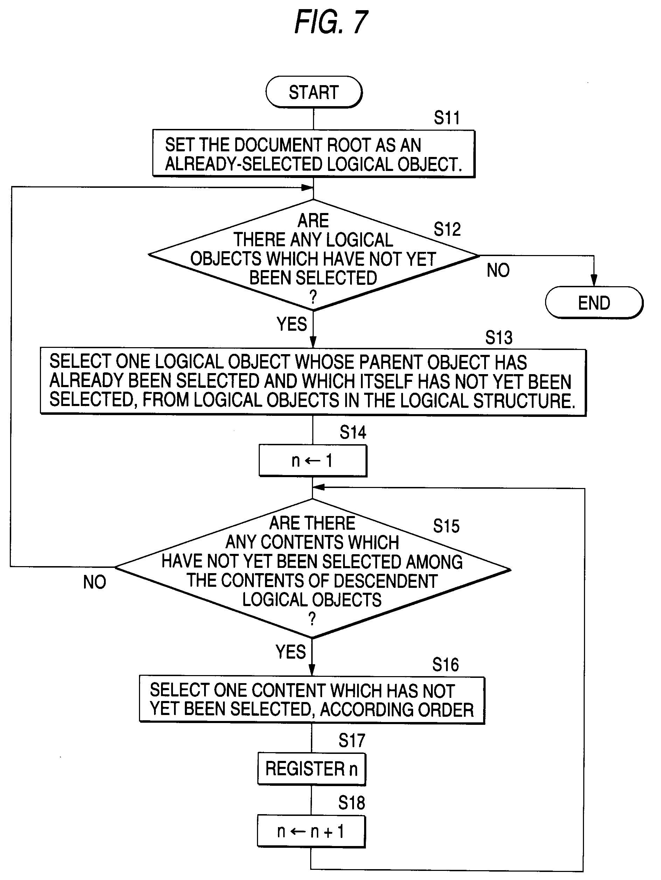

The content editing unit 5 is capable of not only newly preparing the contents but also effecting the respective editing, such as the change, deletion, copying, and movement of the contents. Fig. 7 is a flowchart illustrating an example of the processing of preparation and editing of the contents by the content editing unit 5. For example, in a case where there has been a change in the contents arranged in the logical structure as shown in Fig. 5, the registration and updating of contents management data are effected by processing such as the one shown in Fig. 7. First, in S11, a document root is set as the logical object which has already been selected. In S12, a determination is made as to whether or not there are any logical objects (however, excluding content logical objects) in a logical structure which have not yet been selected. If such logical objects are present, in S13, one logical object, whose parent object has already been selected and which itself has not yet been selected, is selected from the logical objects in the logical structure excluding the content logical objects.

After a variable n is set to 1 in S14, a determination is made in S15 as to whether or not there are any contents which have not yet been selected among all the contents which are arranged as descendent logical objects of the selected logical object. If such contents are present, in S16, of all the contents which are arranged as the descendent logical objects of the selected logical object, the contents which have not yet been selected are selected one at a time according to the order in the logical structure. The selected content belongs to the selected logical object, and n is registered as the order among the logical objects in S18. In S18, the variable n is incremented by 1, and the operation returns to S15. In this way, it is possible to impart order numbers to all the contents which are arranged as the descendent logical objects of the selected logical object.

In S15, if all the contents which are arranged as the descendent logical objects of the selected logical object have been selected, the operation returns to S12 to effect processing with respect to an ensuing logical object. This processing ends when processing is completed with respect to all the logical objects excluding content logical objects. In this way, even if the contents are added or deleted, for example, new order numbers are imparted, so that the order of the logical objects is maintained. For this reason, the order of the contents in the nodes is maintained, so that a contradiction dos not occur in the generated document.

Next, a description will be given of the processing which is effected by the logical-structure generating unit 7 in the generation of the logical structure of a document from the respective logical structure data which are stored in the node-group managing unit 2, the logical-style managing unit 4, and the content managing unit 6, so as to generate a document. This processing is realized by the following four steps of processing:
A) The user designates one of the logical styles being managed by the logical-style managing unit.
B) The logical structure of the document is generated by arranging the nodes in accordance with the designated logical style.
C) The contents are arranged in the logical structure generated in step B).
D) The document is displayed.

The logical structure of a document such as the one shown in Fig. 2B is prepared by using the logical style designated by the user, on the basis of the respective data shown in Fig. 6, for example. Then, the contents are allocated to the logical structure of the document by the document-allocation display unit 8, and the document such as the one shown in Fig. 2A is prepared and displayed. The logical structure of the document which is presented to the user by the aforementioned content editing unit 5 is different in terms of the form of display, but is effected by similar processing.

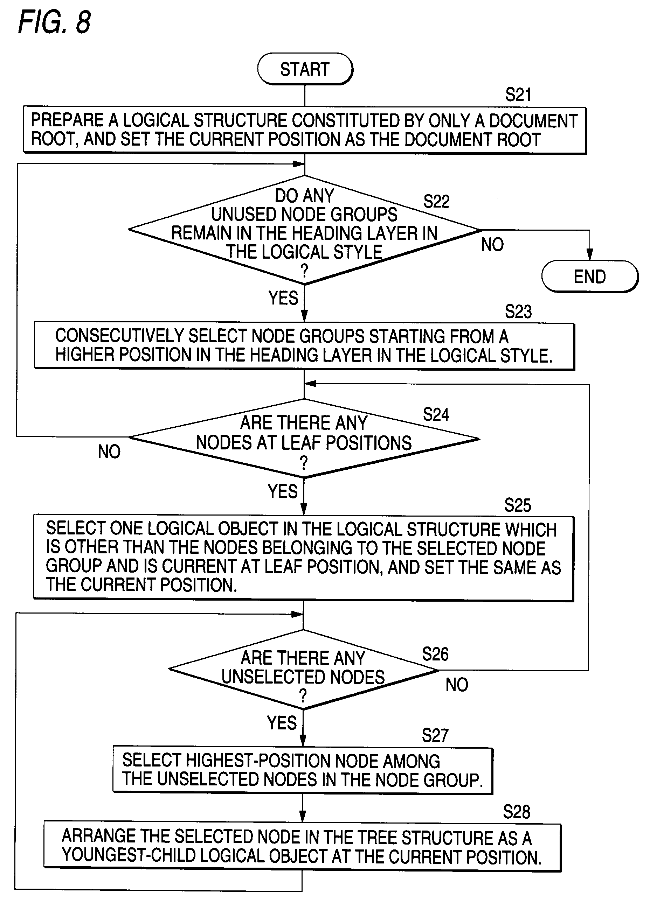

Fig. 8 is a flowchart illustrating an example of the processing of generating a logical structure of a document by the logical-structure generating unit. First, in S21, a logical structure constituted by a document root is prepared, and a current position is set as a root. In S22, a determination is made as to whether or not there remain any node groups which have not been used in the heading layer in the logical style, and if such node groups remain, in S23, the node groups are selected consecutively starting from a higher position in the heading layer in the logical style.

In S24, a determination is made as to whether or not there are any nodes which are other than the nodes belonging to the selected node group, and which are located at positions of leaves as logical objects in the logical structure, i.e., those nodes which do not have lower-position objects. If such nodes are present, in S25, one logical object in the logical structure other which is other than the nodes belonging to the selected node group and is currently at the position of a leaf is selected, and is set as a current position.

In S26, a determination is made as to whether or not there are any nodes which have not yet been selected in the node group, and if there are nodes which have not yet been selected, in S27, a highest-position node is selected among them. In S28, the selected node is arranged in the tree structure as a youngest-child logical object at the current position. At this time, if the current position is a leaf, that logical object is its eldest child. By the processing in S26 to S28, the node included in the selected node group is arranged at a position below the current position. Thus, after nodes in the node group are developed with respect to the nodes which do not have lower-position objects, the operation returns to S24 to select and develop another node to be subjected to node development.

After development is completed with respect to one node group, the operation returns to S22 to effect development with respect to an ensuing node group in the heading layer in a similar manner. At this time, since development is effected on the basis of the tree structure which has been developed with respect to the previous node group, the relationship of upper and lower positions in the heading layer is generated. If development is carried out with respect to the node groups of all the heading layers, the logical structure of a document corresponding to the designated logical style name is generated.

In the above-described specific example, in S21, the logical structure which consists of only a document root is prepared, and the document root is set as the current position. Then, the node group "Classification of Function" is selected, and the node "Input Means" included in the node group "Classification of Function" is developed at a position below the document root. Subsequently, the ensuing node group "Version" is selected, and the nodes "Personal Computer Version" and "Workstation Version" included in the node group "Version" are developed at positions below the node "Input Means." As a result, the logical structure of the document which is comprised of the document root and the headings is generated in Fig. 2B.

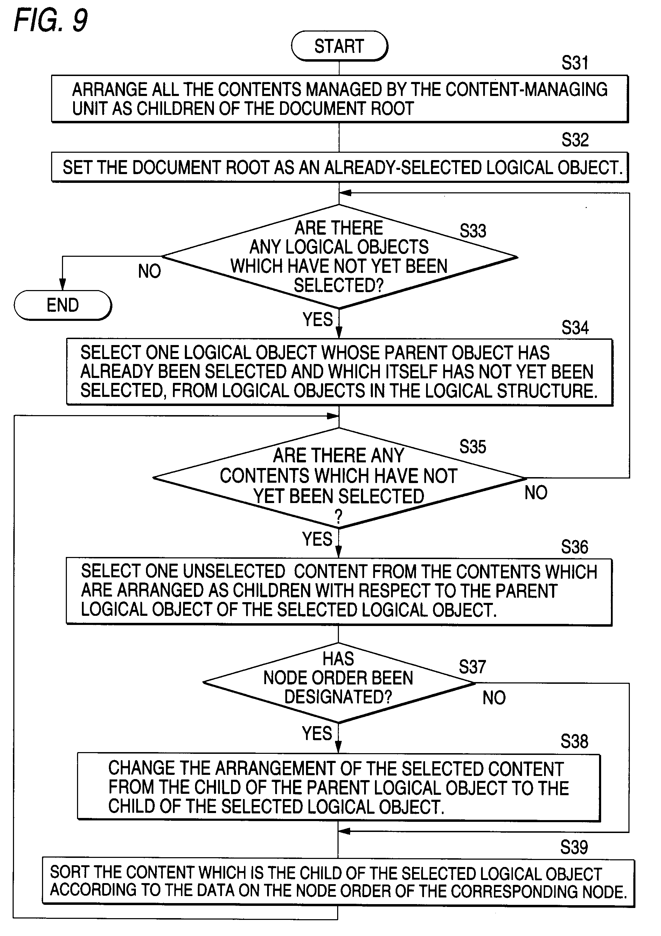

Fig. 9 is a flowchart illustrating an example of processing of the arrangement of the contents by the document-allocation display unit 8. The document-allocation display unit 8 adds as leaves of the tree structure the contents belonging to the nodes of the tree structure generated by the logical-structure generating unit 7. At that time, the following conditions are met.
(1) The contents belonging to a certain node is arranged as a leaf with respect to any one of nodes of a subtree below that node.
(2) The order in which the contents arranged in a subtree appear in that subtree conforms to information being managed by the content managing unit.
(3) The conditions (1) and (2) recursively applies to all the nodes.

A subtree which consists of only nodes whose contents are not arranged as leaves is deleted.

In Fig. 9, first in S31, all the contents managed by the content managing unit 66 are arranged as children of the document root of the logical structure, and in S32, the document root is set as an already-selected logical object.

In S33, a determination is made as to whether or not there are any logical objects (however, excluding content logical objects) which have not yet been selected. If such logical objects are present, in S34, one logical object, whose parent object has already been selected and which itself has not yet been selected, is selected from the logical objects in the logical structure excluding the content logical objects.

In S35, a determination is made as to whether or not there are any contents which have not been selected of the contents which are arranged as children with respect to a parent logical object of the selected logical object. If such contents are present, in S36, one unselected content is selected from the contents which are arranged as children with respect to a parent logical object of the selected logical object. If, in S37, the node order of the node corresponding to the selected logical object has been designated for the selected content, i.e., if the selected content belongs to the selected node, in S38 the arrangement of the selected content is changed from the child of the parent logical object to the child of the selected logical object. Then, in S39, the content which is the child of the selected logical object is sorted according to the data on the node order of the corresponding node. Through the processing in S35 to S39, the content is differentiated into a lower layer.

In the above-described manner, in S35 to S39, the contents which should be included in the selected logical object are differentiated with respect to the logical object selected in S34, and the tree structure changes such that the contents finally form leaves in the lowermost layer. As a result, a document structure in which the contents are arranged is generated. It should be noted that since the contents which are not used remain connected to the document root, it suffices if they are deleted. Alternatively, an arrangement may be provided such that only the content which is included in any one of the nodes of the node group included in the heading layer is initially arranged at a lower position below the document root.

Specifically, in the document structure shown in Fig. 2B, after a document structure consisting of only the document root and the heading layer is generated, the contents are first arranged in the document root. In this example, two contents are arranged in the document root. Of these contents, the content which is included in the node "Input Means" is changed to the child of the node "Input Means." Here, both of these two contents become the children of the node "Input Means." Next, the content " Input is accepted from ..." included in the node "Personal Computer Version" is changed to the child of the node "Personal Computer Version," and the content "Only button clicks by mouse ..." is changed to the child of the node "Workstation Version." As a result, the respective contents are allocated, and a document structure such as the one shown in Fig. 2 is generated. Subsequently, layout is made by using layout information which is provided separately, thereby generating and displaying a document such as the one shown in Fig. 2A.

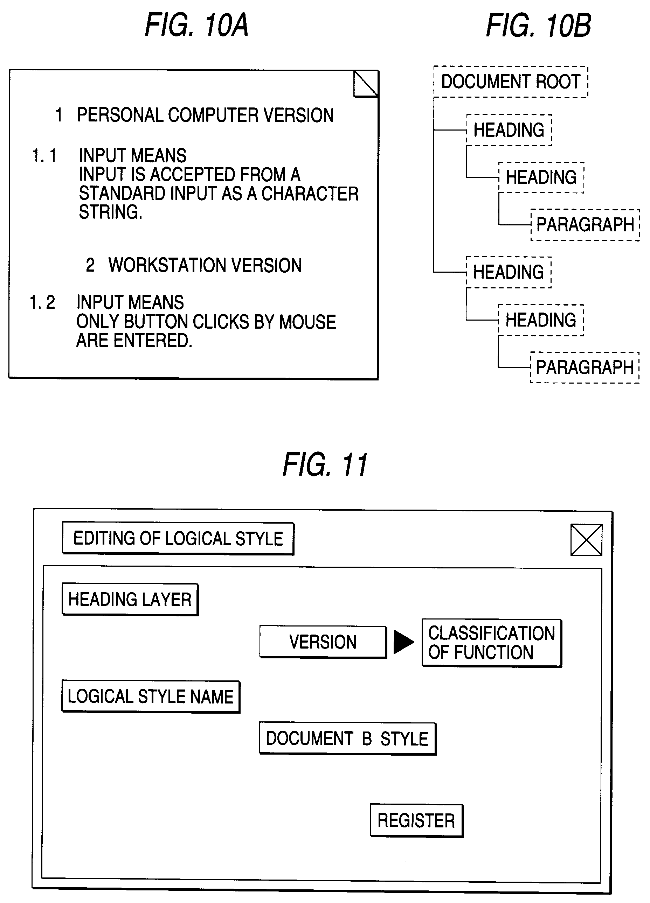

Fig. 10 is an explanatory diagram of another example of a document which is prepared in a specific example of processing in accordance with the embodiment of the present invention. Now, a case is considered in which an attempt is made to prepare a document B shown in Fig. 10A from a state in which the data shown in Fig. 6 are stored in the node-group managing unit 2, the logical-style managing unit 4, and the content managing unit 6. The contents of this document B are the same as those of the document A shown in Fig. 2A, only the structure of chapters differs. In the present invention, the preparation of such documents is very simple.

Fig. 11 is an explanatory diagram of another specific example of the input of a logical style in accordance with the embodiment of the present invention. First, "Document B Style" having a different heading layer is registered. Here, the heading layer is "Version." → "Classification of Function." If the user only selects "Document B Style" for the logical-structure generating unit 7 after the registration of such a logical style, a document structure shown in Fig. 10B is prepared, and a document such as the one shown in Fig. 10A is generated and displayed. Thus, it is possible to easily effect the preparation of a document having a different structure and the change of the structure without changing the contents.

In addition, it is assumed that the contents of the document A have been changed in the content editing unit 5. Then, in the document B as well, a document is generated by referring to the same contents as those of the document A, so that the change in the contents in the document A can be reflected as it is on the document B. Thus, it is possible to allow documents having different logical structures to share the contents, and to allow the change in the contents to be reflected on another document.

Furthermore, for example, in a case where, when the nodes shown in Fig. 3 are inputted, "Output Means" is registered in advance as the node included in the node group "Classification of Function" in addition to "Input Means," both the chapter "Input Means" and the chapter "Output Means" have sections "Personal Computer Version" and "Workstation Version." At this time, by simply adding, for instance, "Mainframe Version" as a node included in the node group "Version," it is possible to add the section "Mainframe Version" to both chapters. This makes it possible to systematically edit those portions which do not belong to the same subtree in the tree structure, which has been impossible with conventional structured-document editing apparatuses.

Thus, it is possible to readily prepare a document having a different structure by using the existing contents. For example, if the data shown in Fig. 6 are formed as a database, it becomes possible to easily prepare a document by using the "parts" of an existing document. When a database is formed, the node-group managing unit 2, the logical-style managing unit 4, and the content managing unit 6 may be respectively formed as databases, or two of them may be formed as one database, or all the data shown in Fig. 6 may be formed as one database. For example, in a case where the data are integrated into one database, the managing unit for managing that database is provided with the functions of the node-group managing unit 2, the logical-style managing unit 4, and the content managing unit 6.

It should be noted that, in the foregoing description, the logical structure of a document has been described as being an apparent structure of a document such as the one shown in Fig. 2B. In a case where the logical structure of a document is actually realized by a computer, it is possible to use a form of representation for representing the logical structure of a document in a computer, such as ODA or SGML. The forms of representation in the apparatus are arbitrary, and may be interchangeable. Accordingly, it is unnecessary for all the data in the apparatus to conform to these forms of representation, and an arrangement may be provided such that these forms of representation are used for only documents which are generated and outputted.

As is apparent from the foregoing description, in accordance with the present invention, it becomes possible for a plurality of documents to share both the logical structure and the content portions, and it becomes possible to effectively and efficiently effect the preparation and editing of a plurality of related documents. In addition, it is possible to alleviate the burden of the updating, maintenance, and management of the contents of the documents. Further, by changing the logical style, it is possible to convert the logical structure of the document without directly editing the logical structure of the document. As a result, the efficiency of the conversion of the logical structure of the document can be enhanced substantially.

In addition, since it is possible to systematically edit those portions which do not belong to the same subtree in the tree structure, which has been impossible with conventional structured-document editing apparatuses when documents are edited, there is an advantage in that the efficiency in the editing of a structured document can be improved.

## Claims

1. A structure document processor for managing or processing a document which has document constituent elements, which are constituted by including document contents, and a hierarchical structure for relating the document constituent elements, said structure document processor comprising:
node-group managing means for setting as a node group nodes located at a same hierarchical level of the hierarchical structure among nodes constituting the hierarchical structure, and for storing the order, in the hierarchical structure, of the nodes included in that node group; and
logical-style managing means for storing a hierarchical relationship, in the hierarchical structure, of node groups.

2. The structure document processor of claim 1, wherein
said node-group managing means stores at least identifiers of the node groups including the nodes and the order, in the hierarchical structure, of the nodes, in correspondence with identifiers of the respective nodes.

3. The structure document processor of claim 1, further comprising:
content managing means for storing the document constituent elements, the nodes to which the document constituent elements respectively belong, and the order of the document constituent elements in the nodes.

4. The structure document processor of claim 3, wherein
said content managing means stores at least an identifier of the node including the document constituent element and the order, in a logical hierarchical structure, of the document constituent element, in correspondence with each of the document constituent elements.

5. The structure document processor of claim 3, further comprising:
logical-structure generating unit for preparing the hierarchical structure on the basis of the hierarchical relationship, in the hierarchical structure, of the node groups stored in said logical-style managing means, the order, in the hierarchical structure, of the nodes in each of the node groups stored in said node-group managing means, the document constituent elements stored in said content managing means, the nodes to which the document constituent elements respectively belong, and the order of the document constituent elements in each of the nodes.

6. The structure document processor of claim 5, further comprising:
changing means for changing the hierarchical relationship of the node groups stored in said logical-style managing means, wherein said logical-structure generating unit changes the hierarchical structure in accordance with the change of the hierarchical relationship of the node groups.

7. A method of processing a structured document for processing a document which has document constituent elements, which are constituted by including document contents, and a hierarchical structure for relating the document constituent elements, comprising the steps of:
recursively executing a step of setting as a node group nodes located at a same hierarchical level of the hierarchical structure among nodes constituting the hierarchical structure, and storing the order, in the hierarchical structure, of the nodes included in that node group, as well as storing a hierarchical relationship, in the hierarchical structure, of node groups, and determining the hierarchical relationship of the node groups in the hierarchical structure from the stored hierarchical relationship of the node groups, and a step of determining the order of arrangement, in the hierarchical structure, of the node groups included in a same layer from the stored hierarchical relationship of the node groups; and
preparing the hierarchical structure of the structured document on the basis of the order of arrangement of the node groups and the order of the nodes included in the respective node groups.

8. The method of processing a structured document of claim 7, wherein the node to which the document constituent element belongs and the order of the document constituent element in the node are further stored, a position at which the document constituent element is arranged in the hierarchical structure is determined on the basis of the same, and the document constituent element is arranged in the prepared hierarchical structure.

9. A database system for storing documents each of which has document constituent elements, which are constituted by including document contents, and a hierarchical structure for relating the document constituent elements, said database system comprising:
node-group managing means for setting as a node group nodes located at a same hierarchical level of the hierarchical structure among nodes constituting the hierarchical structure, and for storing the order, in the hierarchical structure, of the nodes included in that node group;
logical-style managing means for storing a hierarchical relationship, in the hierarchical structure, of node groups; and
content managing means for storing the document constituent elements, the nodes to which the document constituent elements respectively belong, and the order, in the hierarchical structure, of the nodes.
